# DEMANDE DE BREVET EUROPEEN

(11) **EP 0 865 974 A1**
(43) Date de publication de la demande: **23.09.1998**
(21) Numéro de dépôt: 98400614.8
(22) Date de dépôt: 16.03.1998
(51) Int. Cl.: B60R 21/20

(54) **Volant de direction notamment de véhicule automobile**

(30) Priorité: 18.03.1997 FR 9703296
(71) Demandeur: ECIA - EQUIPEMENTS ET COMPOSANTS POUR L'INDUSTRIE AUTOMOBILE, F-25400 Audincourt (FR)
(72) Inventeur: Hoblingre, André, 90380 Roppe (FR); Borde, Patrick, 25100 Audincourt (FR); Goisset, Bernard, 25 310 Blamont (FR)
(74) Mandataire: Habasque, Etienne Joel Jean-François

(57) **Abrégé**

Ce volant de direction notamment de véhicule automobile, du type comportant un coussin central muni d'une coupelle (2) de réception d'un module à sac gonflable (3), est caractérisé en ce que la coupelle (2) et le module à sac gonflable (3) comportent des moyens d'accrochage complémentaires (5,6,7,8) par encliquetage élastique, du module dans la coupelle.

## Description

La présente invention concerne un volant de direction notamment de véhicule automobile.

Plus particulièrement, l'invention se rapporte à un volant de direction de véhicule automobile qui comporte un coussin central muni d'une coupelle de réception d'un module à coussin gonflable sur laquelle est disposé un couvercle de garnissage.

Différents modes de réalisation de ce type de volants ont déjà été décrits dans l'état de la technique.

De façon générale, le module à sac gonflable est fixé dans la coupelle par l'intermédiaire de moyens de vissage, tandis que le couvercle peut comporter une jupe de fixation adaptée pour s'engager autour de cette coupelle et être fixée sur celle-ci par l'intermédiaire de moyens de vissage, de moyens de rivetage, etc...

On conçoit cependant que le montage d'un tel volant est relativement complexe et long et nécessite l'utilisation de pièces supplémentaires telles que des vis, des rivets ou autres.

Le but de l'invention est donc de résoudre ces problèmes.

A cet effet, l'invention a pour objet un volant de direction notamment de véhicule automobile, du type comportant un coussin central muni d'une coupelle de réception d'un module à sac gonflable, caractérisé en ce que la coupelle et le module à sac gonflable comportent des moyens d'accrochage complémentaires par encliquetage élastique, du module dans la coupelle.

L'invention sera mieux comprise à l'aide de la description qui va suivre, donnée uniquement à titre d'exemple et faite en se référant aux dessins annexés, sur lesquels :

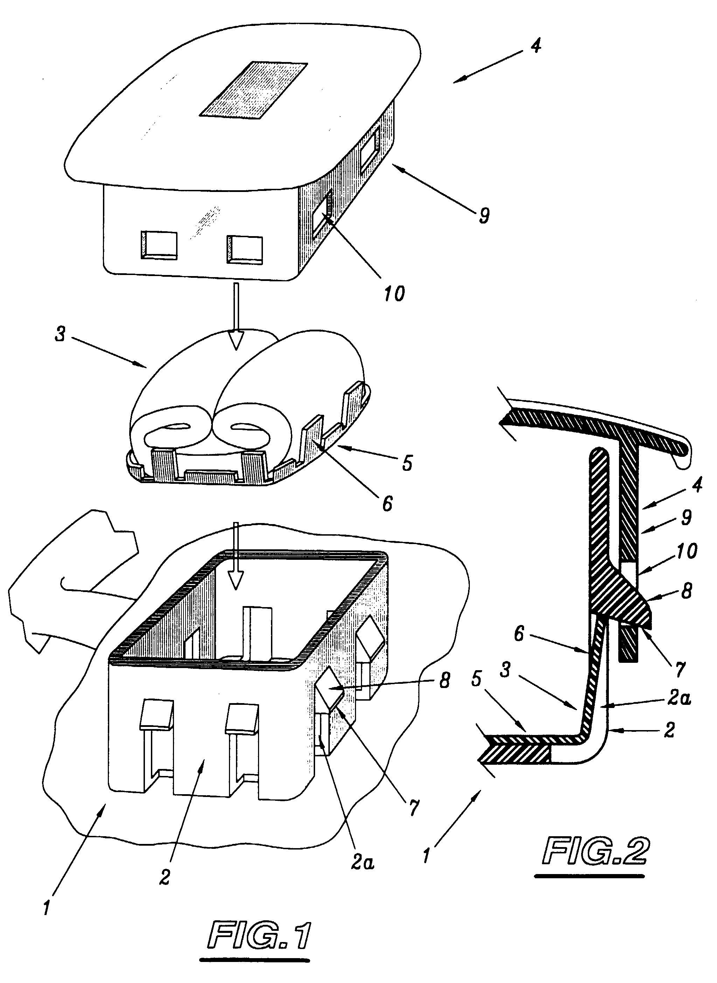

- la Fig.1 représente une vue en perspective éclatée d'un coussin central d'un volant de direction selon l'invention; et
- la Fig.2 représente une vue en coupe illustrant une partie d'un tel volant.

Comme on peut le voir sur ces figures, l'invention concerne un volant de direction de véhicule automobile, qui comporte un coussin central désigné par la référence générale 1 sur ces figures, ce coussin central étant muni d'une coupelle 2 de réception d'un module à sac gonflable désigné par la référence générale 3, sur laquelle est disposé un couvercle de garnissage désigné par la référence générale 4.

Selon l'invention, la coupelle, le module à sac gonflable et le couvercle, comportent des moyens d'accrochage complémentaires par encliquetage élastique d'une part, du module dans la coupelle et d'autre part, du couvercle sur celle-ci.

C'est ainsi par exemple que le module à sac gonflable 3 peut comporter une plaque d'embase désignée par la référence générale 5 sur ces figures, sur laquelle est fixé notamment le sac gonflable, cette plaque d'embase comportant un certain nombre de languettes en saillie latérale élastiquement déformables, et inclinées vers le haut en direction opposée à la plaque d'embase 5, comme la languette désignée par la référence générale 6 sur ces figures.

On conçoit alors que lors de l'insertion du module à sac gonflable 3 dans la coupelle 2, ces languettes inclinées élastiquement déformables, s'escamotent contre le reste du module à sac gonflable pour ne pas gêner cette insertion.

Lorsque le module est en position de montage dans la coupelle, ces languettes s'engagent élastiquement dans des lumières correspondantes 2a de la coupelle 2 et viennent alors en appui contre des surfaces de butée complémentaires, par exemple 7 de celle-ci, formées par les arêtes de la coupelle 2 délimitant les bords supérieurs des lumières de celle-ci, pour permettre un verrouillage en position du module dans cette coupelle.

On notera que chaque surface de butée de la coupelle 2 peut en fait se présenter sous la forme d'un pan incliné constituant l'arête inférieure d'un doigt en saillie latérale à partir de la coupelle, un tel doigt étant désigné par exemple par la référence générale 8 sur ces figures, pour assurer un verrouillage automatique sans jeu du module à sac gonflable dans la coupelle.

Ce doigt peut également constituer des moyens d'encliquetage adaptés pour coopérer avec des trous correspondants ménagés dans une jupe de fixation du couvercle 4 pour assurer l'accrochage de celui-ci sur la coupelle.

En effet, et comme cela est visible sur ces figures, ce couvercle 4 peut comporter une jupe de fixation désignée par la référence générale 9, munie de trous régulièrement répartis sur celle-ci, dont l'un est par exemple désigné par la référence générale 10 sur ces figures.

Lorsque le module à sac gonflable 3 a été inséré et bloqué en position dans la coupelle, le couvercle 4 peut alors être monté sur celle-ci.

A cet effet, on engage la jupe 9 du couvercle autour de la coupelle 2 et on pousse le couvercle en position, la jupe s'évasant alors légèrement pour franchir les doigts 8 de la coupelle afin de permettre la venue des trous par exemple 10 de cette jupe de ce couvercle en prise avec ces doigts, pour assurer l'accrochage par encliquetage élastique du couvercle sur la coupelle.

Dans ce cas, l'arête inférieure de chaque trou de la jupe de fixation du couvercle vient également coopérer avec le pan incliné 7 de chaque doigt 8 de la coupelle 2, pour assurer un montage automatique sans jeu du couvercle sur la coupelle, la partie supérieure plane de ce couvercle venant en appui sur la partie supérieure du module à sac gonflable.

Bien entendu, ce couvercle comporte de façon classique des zones de rupture permettant le déploiement du sac gonflable lors du déclenchement du module.

On conçoit alors que le volant de direction selon l'invention présente un certain nombre d'avantages par rapport aux volants de l'état de la technique, dans la mesure où celui-ci ne nécessite plus de moyens de fixation particuliers à vis ou à rivets, du module à sac gonflable dans la coupelle et du couvercle sur celle-ci, la fixation de ces différents éléments sur la coupelle étant assurée par des moyens d'accrochage à encliquetage élastique lors du montage du module dans la coupelle et du couvercle autour de celle-ci.

Il va de soi bien entendu que différents modes de réalisation de ces moyens d'accrochage complémentaires par encliquetage élastique peuvent être envisagés.

## Revendications

1. Volant de direction notamment de véhicule automobile, du type comportant un coussin central muni d'une coupelle (2) de réception d'un module à sac gonflable (3), caractérisé en ce que la coupelle (2) et le module à sac gonflable (3) comportent des moyens d'accrochage complémentaires (5,6,7,8) par encliquetage élastique, du module dans la coupelle.

2. Volant selon la revendication 1, caractérisé en ce qu'un couvercle est disposé sur la coupelle (2) et en ce que le couvercle (4) et la coupelle (2) comprennent des moyens d'accrochage complémentaires (7,8,9,10) pour encliquetage élastique.

3. Volant selon la revendication 1 ou 2, caractérisé en ce que le module à sac gonflable (3) comporte une plaque d'embase (5) à partir de laquelle s'étendent des languettes inclinées (6) élastiquement déformables, adaptées pour s'escamoter contre le module lors de l'engagement de celui-ci dans la coupelle et venir en appui contre des surfaces de butée (7) de la coupelle en position d'accrochage du module dans celle-ci.

4. Volant selon la revendication 2 ou 3, caractérisé en ce que le couvercle (4) comporte une jupe de fixation (9) munie de trous (10) et adaptée pour être engagée sur la coupelle dans une position d'accrochage, dans laquelle des parties en saillie (8) de la coupelle (2) s'engagent dans ces trous (10) de la jupe pour assurer l'accrochage du couvercle sur la coupelle.

5. Volant selon la revendication 4, caractérisé en ce que les parties en saillie de la coupelle sont formés par des doigts d'accrochage (8) de celle-ci.

6. Volant selon les revendications 3,4 et 5, caractérisé en ce que la coupelle (2) comporte sous les doigts d'accrochage (8), des lumières de passage des languettes (6) de la plaque d'embase (5) du module à sac gonflable, les surfaces de butée (7) de cette coupelle étant formées par des pans inclinés des arêtes inférieures de ces doigts.
